# EUROPEAN PATENT SPECIFICATION

(11) **EP 4 585 780 B1**
(45) Date of publication and mention of the grant of the patent: **12.11.2025**
(21) Application number: 24223870.7
(22) Date of filing: 31.12.2024
(51) Int. Cl.: E05D 7/00, E05D 15/10

(54) **A SLIDING DOOR MOVEMENT MECHANISM**
BEWEGUNGSMECHANISMUS FÜR SCHIEBETÜR
MÉCANISME DE DÉPLACEMENT DE PORTE COULISSANTE

(30) Priority: 11.01.2024 TR 202400318
(43) Date of publication of application: 16.07.2025
(73) Proprietor: Ford Otomotiv Sanayi Anonim Sirketi, Istanbul (TR)
(72) Inventor: GÜNDOGDU, Özgür, Istanbul (TR); DALYAN, Görkem, Istanbul (TR); AKYILDIZ, Berat Hüseyin, Istanbul (TR); AKYÜZ, Can Elit, Istanbul (TR); ÖZKAN, Beyhan Özün, Istanbul (TR); KÜÇÜK, Aykut, Istanbul (TR)
(74) Representative: Dericioglu, E. Korhan

(56) References cited:
- WO-A1-2020/122844
- DE-B3- 102015 012 641

## Description

### Field of the Invention

The present invention relates to a sliding door movement mechanism, which connects the vehicle body and the sliding door for the free movement of the sliding door in the opening and closing direction within a guide rail, particularly in vehicles with sliding doors.

### Background of the Invention

Sliding door movement mechanisms are mechanisms that enable the vehicle doors to be opened and closed. These mechanisms are generally designed as sliding door systems moving on wheeled slides or rails. For the opening of the vehicle doors, a pushing or pulling movement from inside or outside actuates the sliding door mechanism and allows the door to open by sliding it in the desired direction. These mechanisms are generally designed to enable silent and smooth opening and closing of the automobile doors. In addition, these mechanisms can also be used to lock the vehicle doors. In this way, the doors can be locked securely so that they cannot be opened in undesirable situations. Sliding door mechanisms increase the comfort of the driver and passengers by enabling safe and easy-to-use opening and closing of the automobile doors.

The vehicle sliding door movement bracket is a part that supports the sliding door mechanism of the automobile doors and enables movement thereof. This bracket is usually located on the door and provides the support necessary for mounting the sliding door mechanism. The door movement brackets are usually manufactured from durable and robust materials and are designed to increase the stability and sturdiness of the sliding door mechanism. In addition, these brackets also support the proper tracking of the path of the door to ensure the correct operation of the sliding door mechanism. This ensures that the vehicle doors are opened and closed quietly and smoothly. Sliding door movement brackets are important parts designed to ensure safe and efficient operation of the automobile doors.

A vehicle sliding door bracket locknut is a fastening member used to hold the brackets of the sliding door mechanism in place. A locknut is designed to hold a threaded bolt or a screw firmly in place and prevent it from loosening due to vibration or movement. In sliding door systems of vehicles, brackets and other mounting points must be firmly secured for safe and smooth operation of the door. Locknuts generally have self-locking features and may include a metal insert applied to the inner surface of a threaded nut. This insert helps the nut maintain a tighter grip on the bolt and prevents loosening. Locknuts used in vehicles are made of high-strength materials because they are often exposed to vibration and impacts. Proper tightening of the vehicle sliding door bracket locknuts ensures smooth operation and safety of the door mechanism. If the locknut is not tightened adequately, there may be looseness or unfirmness in the door mechanism, which may cause the door not to operate correctly or even malfunction. On the other hand, tightening it too tightly can also damage the components or cause difficulties during assembly and disassembly. For this reason, vehicle manufacturers usually specify the appropriate torque values to be used during assembly.

The Chinese utility model document CN203476039 (U), which is an application in the state of the art, discloses that a normal state-of-the-art locknut is placed at the end of the adjusting screw. Also DE 10 2015 012641 B3 discloses a sliding door movement mechanism comprising a locknut.

### Objects of the Invention

It is an object of the present invention to provide a sliding door movement mechanism having a locknut.

Another object of the present invention is to provide a sliding door movement mechanism having a locknut which can only be intervened by means of a special apparatus.

A further object of the present invention is to provide a sliding door movement mechanism wherein the geometric form of the special apparatus of the locknut matches the geometric form of the tightening cavity in the locknut.

### Summary of the Invention

The sliding door movement mechanism, which is developed to achieve the objects of the present invention and is defined in the first claim and the other claims dependent thereon, comprises a fixing bracket, a tracking bracket, an adjustment pin, an adjustment nut, and a locknut.

The fixing bracket is provided for fixing the sliding door movement mechanism to the sliding door. The tracking bracket is adapted to allow the sliding door to be opened and closed within a guide fixed to the vehicle body by following the said guide. The connection between the fixing bracket and the tracking bracket is provided by an adjustment pin. Fine adjustment of the sliding door in an upward and downward direction is also provided by means of the adjustment pin. The adjustment nut in the application interacts with the adjustment pin when the adjustment pin is rotated about its central axis, allowing the tracking bracket to move upwards and downwards. The adjustment pin is prevented from being dislodged during clockwise or counterclockwise rotation thereof by means of the locknut.

### Detailed Description of the Invention

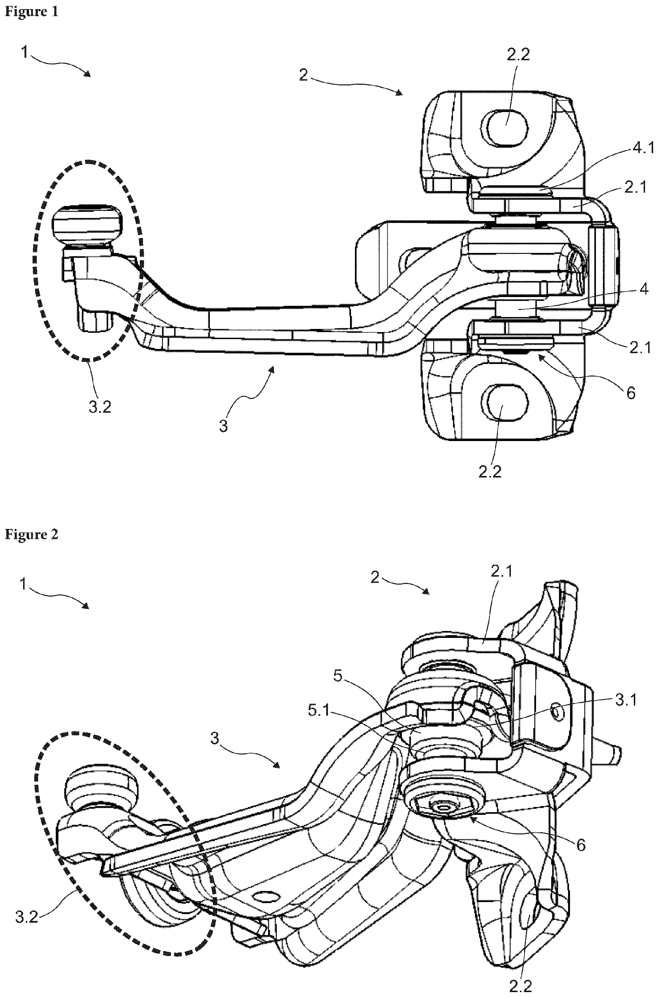

The sliding door movement mechanism developed to achieve the objects of the present invention is illustrated in the accompanying figures, in which
**Figure 1****.** is a front view of the sliding door movement mechanism.
**Figure 2****.** is a perspective view of the sliding door movement mechanism.

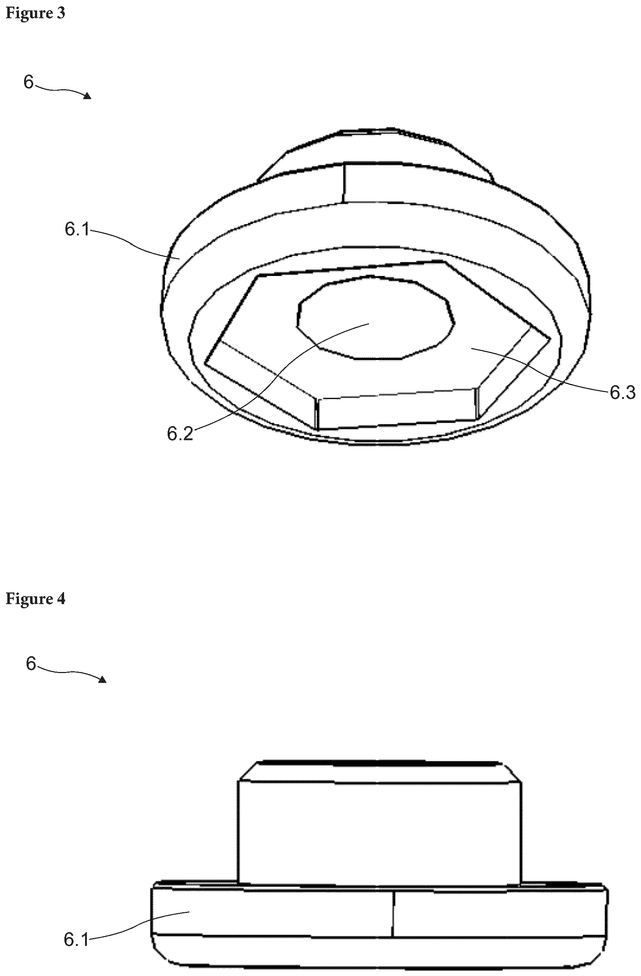

**Figure 3****.** is a perspective view of the locknut.
**Figure 4****.** is a front view of the locknut.

The components in the figures are numbered individually and the reference numbers corresponding thereto are given below:
**1.** Sliding door movement mechanism
**2.** Fixing bracket
   **2.1.** Handle bar
   **2.2.** Fixing hole
**3.** Tracking bracket
   **3.1.** Adjustment gap
   **3.2.** Rotating mechanism
**4.** Adjustment pin
   **4.1.** Turning head
**5.** Adjustment nut
   **5.1.** Adjustment space
**6.** Locknut
   **6.1.** Body
   **6.2.** Fitting Bore
   **6.3.** Tightening cavity

A sliding door movement mechanism (1), which connects the vehicle body and the sliding door for the free movement of the sliding door in the opening and closing direction within a guide rail, particularly in vehicles with sliding doors, basically comprises
- at least one fixing bracket (2), which is fixed to the sliding door by means of a fastening member inserted into at least one fixing hole (2.2) and has two handle bars (2.1) extending opposite each other,
- at least one tracking bracket (3), which moves together in interaction with the fixing bracket (2) through an adjustment gap (3.1) and enables the sliding door to move in the opening and closing direction by the free movement of its rotating mechanism (3.2) within the guide rail provided in the vehicle body,
- at least one adjustment pin (4), which is passed through both of the handle bars (2.1) provided in the fixing bracket (2) and the adjustment gap (3.1) provided in the tracking bracket (3) and adapted to be rotatable about its central axis by means of a turning apparatus placed on the turning head (4.1), and which, when rotated about its central axis, enables the tracking bracket (3) and thus the sliding door to be positioned at an optimum distance by being moved upwards and downwards,
- at least one adjustment nut (5) which is inserted into the adjustment gap (3.1) provided in the tracking bracket (3), and through which the adjustment pin (4) passes, and which moves the tracking bracket (3) upwards and downwards by means of the adjustment pin (4) upon rotation of the adjustment pin (4) about its axis,
- at least one locknut (6), which is placed by means of its fitting bore (6.2) at the other end of the adjustment pin (4) without the rotation head (4.1), in order to prevent the adjustment pin (4) from detaching from the handle bar (2.1) when the adjustment pin (4) is rotated about its axis,
   - whose body (6.1) is formed in a circular cylindrical shape to prevent the use of standard turning apparatuses,
   - which is adapted to resist a predefined load greater than the working load of the adjustment pin (4), thereby preventing the adjustment pin (4) from being dislodged from the handle bar (2.1),
   - which contains a tightening cavity (6.3) in its body (6.1) and is tightened and secured by placing an apparatus that matches the geometric form of the said tightening cavity (6.3) inside the tightening cavity (6.3) so as to resist the said predefined load.

**In** one embodiment of the invention, the sliding door movement mechanism (1) comprises at least one fixing bracket (2). The said fixing bracket (2) is adapted for fixing the sliding door movement mechanism (1) to the sliding door. The fixing bracket (2) in the said embodiment of the invention comprises at least one fixing hole (2.2). The said fixing hole (2.2) is provided for rigid mounting of the fixing bracket (2) to the sliding door, and in this embodiment of the invention the fixing bracket (2) has two fixing holes (2.2). A fastening member is passed through the fixing hole (2.2) and tightened, and in this way the fixing bracket (2) is connected to the sliding door. The fixing bracket (2) in the said embodiment of the invention also comprises two handle bars (2.1). The said handle bars (2.1) are formed for mounting the tracking bracket (3) to the fixing bracket (2), and the tracking bracket (3) is placed between the said two handle bars (2.1), and the movement of the sliding door is provided in this way. There is a gap in the middle part of both of the handle bars (2.1) and an adjustment pin (4) is passed through the said gap, and when the tracking bracket (3) is mounted to the fixing bracket (2), one end of the adjustment pin (4) is located on one handle bar (2.1) and the other end thereof is located on the other handle bar (2.1). In the said embodiment of the invention, the two handle bars (2.1) are positioned parallel to each other.

In one embodiment of the invention, the sliding door movement mechanism (1) comprises at least one tracking bracket (3). The said tracking bracket (3) is adapted to allow the sliding door to be opened and closed within a guide that is fixed to the vehicle body by following the said guide. The tracking bracket (3) in the said embodiment of the invention comprises at least one adjustment gap (3.1). The said adjustment gap (3.1) is formed on the side of the tracking bracket (3) which is mounted on the fixing bracket (2), and an adjustment pin (4) is passed therethrough. The tracking bracket (3) in the said embodiment of the invention also comprises a rotating mechanism (3.2) in addition to the adjustment gap (3.1). The said rotating mechanism (3.2) is the part that is placed within the guide in the vehicle body, and when the sliding door is moved in the opening or closing direction, the said rotating mechanism (3.2) also moves together with the sliding door within the said guide in the vehicle body and ensures that the door moves in a defined movement direction. The rotating mechanism (3.2) may have one or more rollers.

In one embodiment of the invention, the sliding door movement mechanism (1) comprises at least one adjustment pin (4). The said adjustment pin (4) provides the connection between the fixing bracket (2) and the tracking bracket (3) as well as enabling the fine adjustment of the tracking bracket (3) and thus the sliding door in the upward and downward direction. The adjustment pin (4) in the said embodiment of the invention comprises a turning head (4.1). A turning apparatus is placed on the said turning head (4.1) and a turning force is applied to the turning head (4.1) about the central axis of the adjustment pin (4) to rotate the adjustment pin (4) clockwise or counterclockwise about its said central axis. As a result of the rotation of the adjustment pin (4) about the said axis, the tracking bracket (3) is enabled to move upwards and downwards, and in this way the adjustment of the sliding door is completed.

In one embodiment of the invention, the sliding door movement mechanism (1) comprises at least one adjustment nut (5). The said adjustment nut (5) is inserted into the adjustment gap (3.1) provided in the tracking bracket (3), and the adjustment pin (4) is fitted through the adjustment space (5.1). In other words, when the adjustment pin (4) is rotated about its central axis, the adjustment nut (5) interacts with the adjustment pin (4) and enables the tracking bracket (3) to move upwards and downwards.

In one embodiment of the invention, the sliding door movement mechanism (1) comprises at least one locknut (6). The said locknut (6) is adapted to prevent the adjustment pin (4) from being dislodged from between the two handle bars (2.1) during the clockwise or counterclockwise rotation of the adjustment pin (4) about its central axis and to provide security. The locknut (6) in the said embodiment of the invention is placed at the other end of the adjustment pin (4) without the turning head (4.1), and does not come out of the adjustment pin (4) under a predefined load greater than the working load ensuring that the adjustment pin (4) is kept in the place where it is positioned. Since the said predefined load will always be greater than the working load, as long as there is no external intervention on the locknut (6), the locknut (6) remains at the other end of the adjusting pin (4) without the turning head (4.1), and keeps the adjustment pin (4) where it is positioned. The tracking bracket (6) in the said embodiment of the invention comprises at least one body (6.1). The said body (6.1) is formed in a cylindrical geometric shape and it does not include any ribbed structure around it so that it cannot be intervened by a standard equipment. The body (6.1) in the said embodiment of the invention has a fitting bore (6.2) in the center thereof, and an adjustment pin (4) is passed through the said fitting bore (6.2). A predefined load greater than the working load is loaded onto the locknut (6) by means of a special apparatus placed in the tightening cavity (6.3) provided in the body (6.1). The tightening cavity (6.3) in the said embodiment of the invention is formed in a hexagonal geometric form, and different geometric forms can be adapted in different embodiments of the invention. A special apparatus produced according to the geometric form of the tightening cavity (6.3) is placed in the tightening cavity (6.3), and the locknut (6) is rotated about its central axis and a predefined load greater than the working load is loaded on the locknut (6). When the locknut (6) is fixed in this way, the locknut (6) cannot be interfered with again except for an intervention with a special apparatus. In other words, the locknut (6) cannot be interfered with from the outside, since the locknut (6) is turned about its own axis by means of a special apparatus inserted into the tightening cavity (6.3).

## Claims

1. A sliding door movement mechanism (1), which connects the vehicle body and the sliding door for the free movement of the sliding door in the opening and closing direction within a guide rail, particularly in vehicles with sliding doors, basically **comprising**
- at least one fixing bracket (2), which is fixed to the sliding door by means of a fastening member threaded into at least one fixing hole (2.2) and has two handles (2.1) extending opposite each other,
- at least one tracking bracket (3), which moves together in interaction with the fixing bracket (2) through the adjustment gap (3.1) and enables the sliding door to move in the opening and closing direction by the free movement of its rotating mechanism (3.2) within the guide rail provided in the vehicle body,
- at least one adjustment pin (4), which is passed through both handle bars (2.1) provided in the fixing bracket (2) and the adjustment gap (3.1) provided in the tracking bracket (3) and is adapted to be rotatable about its central axis by means of a turning apparatus placed on the turning head (4.1), and which, when rotated about its central axis, enables the tracking bracket (3) and thus the sliding door to be positioned at an optimum distance being moved up and down,
- at least one adjustment nut (5) which is inserted into the adjustment gap (3.1) provided in the tracking bracket (3), and through which the adjustment pin (4) passes, and which moves the tracking bracket (3) up and down by means of the adjustment pin (4) upon rotation of the adjustment pin (4) about its axis,
- at least one locknut (6), which is, through the fitting bore (6.2), disposed at the other end of the adjustment pin (4) without the rotation head (4.1), in order to prevent the adjustment pin (4) from detaching from the handle bar (2.1) when the adjustment pin (4) is rotated about its axis, **characterized in that**
• the body (6.1) of the locknut (6) is formed in a circular cylindrical shape to prevent the use of standard turning apparatuses,
• the locknut (6) is adapted to resist a predefined load greater than the working load of the adjustment pin (4), thereby preventing the adjustment pin (4) from being dislodged from the handle bar (2.1),
• the locknut (6) contains a tightening cavity (6.3) in its body (6.1) and is tightened and secured by placing an apparatus that matches the geometric form of the said tightening cavity (6.3) inside the tightening cavity (6.3) so as to resist the said predefined load.

2. Sliding door movement mechanism (1) according to Claim 1, **characterized by** the locknut (6), which is adapted to prevent the adjustment pin (4) from being dislodged from between the two handle bars (2.1) during the clockwise or counterclockwise rotation of the adjustment pin (4) about its central axis and to provide security.

3. Sliding door movement mechanism (1) according to Claim 1, **characterized by** the locknut (6), which is placed at the other end of the adjustment pin (4) without the turning head (4.1), and does not come out of the adjustment pin (4) under a predefined load greater than the working load ensuring that the adjustment pin (4) is kept in the place where it is positioned.

4. Sliding door movement mechanism (1) according to Claim 1, **characterized by** the locknut (6), which has a body (6.1) that is formed in a cylindrical geometric shape and does not include any ribbed structure around it so that it cannot be intervened by a standard equipment.

5. Sliding door movement mechanism (1) according to Claim 1, **characterized by** the locknut (6) comprising a body (6.1) that has a fitting bore (6.2) in the center thereof, and wherein an adjustment pin (4) is passed through the said fitting bore (6.2).

6. Sliding door movement mechanism (1) according to Claim 1, **characterized by** the locknut (6) on which a predefined load greater than the working load is loaded by means of a special apparatus placed in the tightening cavity (6.3) formed in the body (6.1).

7. Sliding door movement mechanism (1) according to Claim 1, **characterized by** the locknut (6) having the tightening cavity (6.3) formed in a hexagonal geometric form.

8. Sliding door movement mechanism (1) according to Claim 1, **characterized by** the locknut (6), which is rotated about its central axis by placing in the tightening cavity (6.3) a special apparatus produced according to the geometric form of the tightening cavity (6.3), and is loaded with a predefined load greater than the working load.

## Patentansprüche

1. Schiebetür-Bewegungsmechanismus (1), der, insbesondere in Fahrzeugen mit Schiebetüren, die Fahrzeugkarosserie und die Schiebetür verbindet, um eine freie Bewegung der Schiebetür in Öffnungs- und Schließrichtung innerhalb einer Führungsschiene zu ermöglichen, im Wesentlichen **umfassend**
- mindestens einen Feststeller (2), der mittels eines in mindestens ein Befestigungsloch (2.2) eingefädelten Befestigungselements an der Schiebetür befestigt ist und zwei einander gegenüberliegend erstreckende Griffstange (2.1) aufweist,
- mindestens eine Laufrolle (3), die sich in Wechselwirkung mit dem Feststeller (2) durch den Verstellspalt (3.1) bewegt und es der Schiebetür ermöglicht, sich durch die freie Bewegung ihres Drehmechanismus (3.2) innerhalb der in der Fahrzeugkarosserie vorgesehenen Führungsschiene in Öffnungs- und Schließrichtung zu bewegen,
- mindestens einen Verstellstift (4), der sowohl durch die beiden in dem Feststeller (2) vorgesehenen Griffstangen (2.1) als auch durch den in der Laufrolle (3) vorgesehenen Verstellspalt (3.1) hindurchgeführt ist und dazu eingerichtet ist, mittels einer am Drehkopf (4.1) angeordneten Drehvorrichtung um seine Mittelachse drehbar zu sein, und der, wenn er um seine Mittelachse gedreht wird, es ermöglicht, die Laufrolle (3) und damit die Schiebetür in einem optimalen Abstand zu positionieren, indem sie nach oben und unten bewegt wird,,
- mindestens eine Verstellmutter (5), die in den in der Laufrolle (3) vorgesehenen Verstellspalt (3.1) eingeführt ist und durch die der Vertellstift (4) hindurchgeht und die die Laufrolle (3) mittels des Verstellstifts (4) bei Drehung des Verstellstifts (4) um seine Achse auf und ab bewegt,
- mindestens eine Kontermutter (6), die durch die Passbohrung (6.2) am anderen Ende des Verstellstifts (4) ohne den Drehkopf (4.1) angeordnet ist, um zu verhindern, dass sich der Vertellstift (4) von der Griffstange (2.1) löst, wenn der Verstellstift (4) um seine Achse gedreht wird, **dadurch gekennzeichnet, dass**
• der Körper (6.1) der Kontermutter (6) kreisförmig zylindrisch geformt ist, um die Verwendung von Standard-Drehvorrichtungen zu verhindern,
• die Kontermutter (6) dazu eingerichtet ist, einer vordefinierten Last, die größer ist als die Arbeitslast des Verstellstifts (4), standzuhalten, wodurch verhindert wird, dass sich der Verstellstift (4) aus der Griffstange (2.1) löst,
• die Kontermutter (6) in ihrem Körper (6.1) einen Spannhohlraum (6.3) enthält und wird festgezogen und gesichert, indem eine Vorrichtung, die der geometrischen Form des Spannhohlraums (6.3) entspricht, in den Spannhohlraum (6.3) eingesetzt wird, um der vordefinierten Belastung standzuhalten.

2. Schiebetür-Bewegungsmechanismus (1) nach Anspruch 1, **gekennzeichnet durch** die Kontermutter (6), die dazu eingerichtet ist, zu verhindern, dass sich der Verstellstift (4) während der Drehung des Verstellstifts (4) im Uhrzeigersinn oder gegen den Uhrzeigersinn um seine Mittelachse aus der Position zwischen den beiden Griffstangen (2.1) löst, und um Sicherheit zu gewährleisten.

3. Schiebetür-Bewegungsmechanismus (1) nach Anspruch 1, **gekennzeichnet durch** die Kontermutter (6), die am anderen Ende des Verstellstifts (4) ohne den Drehkopf (4.1) angebracht ist und unter einer vordefinierten Last, die größer ist als die Arbeitslast, nicht aus dem Verstellstift (4) herauskommt, wodurch sichergestellt wird, dass der Verstellstift (4) an der Stelle gehalten wird, an der er positioniert ist.

4. Schiebetür-Bewegungsmechanismus (1) nach Anspruch 1, **gekennzeichnet durch** die Kontermutter (6), die einen Körper (6.1) aufweist, der in einer zylindrischen geometrischen Form ausgebildet ist und keine gerippte Struktur um sich herum aufweist, so dass er nicht durch eine Standardausrüstung beeinträchtigt werden kann.

5. Schiebetür-Bewegungsmechanismus (1) nach Anspruch 1, **dadurch gekennzeichnet, dass** die Kontermutter (6) einen Körper (6.1) umfasst, der in seiner Mitte eine Passbohrung (6.2) aufweist, und wobei ein Verstellstift (4) durch die Passbohrung (6.2) geführt ist.

6. Schiebetür-Bewegungsmechanismus (1) nach Anspruch 1, **gekennzeichnet durch** die Kontermutter (6), auf die mittels einer speziellen Vorrichtung, die in dem im Körper (6.1) ausgebildeten Spannhohlraum (6.3) angeordnet ist, eine vordefinierte Last aufgebracht wird, die größer ist als die Arbeitslast.

7. Schiebetür-Bewegungsmechanismus (1) nach Anspruch 1, **dadurch gekennzeichnet, dass** die Kontermutter (6) den in einer sechseckigen geometrischen Form ausgebildeten Spannhohlraum (6.3) aufweist.

8. Schiebetür-Bewegungsmechanismus (1) nach Anspruch 1, **gekennzeichnet durch** die Kontermutter (6), die durch Einbringen einer speziellen, entsprechend der geometrischen Form des Spannhohlraums (6.3) hergestellten Vorrichtung in den Spannhohlraum (6.3) um ihre Mittelachse gedreht und mit einer vordefinierten Last belastet wird, die größer ist als die Arbeitslast.

## Revendications

1. Mécanisme de mouvement de porte coulissante (1), qui relie la carrosserie du véhicule et la porte coulissante afin de permettre le libre déplacement de la porte coulissante dans la direction d'ouverture et de fermeture à l'intérieur d'un rail de guidage, notamment dans les véhicules à portes coulissantes, **comprenant** essentiellement :
- au moins un support de fixation (2), fixé à la porte coulissante au moyen d'un élément de fixation vissé dans au moins un trou de fixation (2.2) et comportant deux barres de poignée (2.1) s'étendant en sens opposé ;
- au moins un support de guidage (3), se déplaçant conjointement en interaction avec le support de fixation (2) par l'intermédiaire du jeu de réglage (3.1) et permettant le déplacement de la porte coulissante dans la direction d'ouverture et de fermeture grâce au mouvement libre de son mécanisme rotatif (3.2) à l'intérieur du rail de guidage de la carrosserie du véhicule ;
- au moins une broche de réglage (4), qui traverse les deux barres de poignée (2.1) prévues sur le support de fixation (2) et le jeu de réglage (3.1) ménagé dans le support de guidage (3), et qui est conçue pour pivoter autour de son axe central au moyen d'un dispositif de rotation placé sur la tête de rotation (4.1), sa rotation autour dudit axe permettant de positionner verticalement le support de guidage (3) - et donc la porte coulissante - à une distance optimale ;
- au moins un écrou de réglage (5), qui est inséré dans le jeu de réglage (3.1) prévu dans le support de guidage (3), et au travers duquel passe la broche de réglage (4), et qui déplace le support de guidage (3) vers le haut et vers le bas au moyen de la broche de réglage (4) lors de la rotation de la broche de réglage (4) autour de son axe ;
- au moins un contre-écrou (6), qui est, par l'intermédiaire de l'alésage de montage (6.2), disposé à l'autre extrémité de la broche de réglage (4), du côté opposé à la tête de rotation (4.1), afin d'empêcher la broche de réglage (4) de se désengager des barres de poignée (2.1) lorsque la broche de réglage (4) est tournée autour de son axe, **caractérisé en ce que** :
• le corps (6.1) du contre-écrou (6) est de forme cylindrique, de manière à empêcher l'utilisation d'appareils de rotation standards ;
• le contre-écrou (6) est conçu pour résister à une charge prédéfinie supérieure à la charge de travail de la broche de réglage (4), empêchant ainsi la broche de réglage (4) de se désengager des barres de poignée (2.1),
• le contre-écrou (6) comporte une cavité de serrage (6.3) dans son corps (6.1) et est serré et fixé par l'introduction, à l'intérieur de la cavité de serrage (6.3), d'un dispositif correspondant à la forme géométrique de la cavité de serrage (6.3), de manière à résister à la charge prédéfinie.

2. Mécanisme de mouvement de porte coulissante (1) selon la revendication 1, **caractérisé par** le contre-écrou (6), qui est conçu pour empêcher la broche de réglage (4) de se désengager des barres de poignée (2.1) lors de la rotation de la broche de réglage (4), dans le sens horaire ou antihoraire, autour de son axe central, et pour assurer la sécurité.

3. Mécanisme de mouvement de porte coulissante (1) selon la revendication 1, **caractérisé par** le contre-écrou (6), qui est placé à l'autre extrémité de la broche de réglage (4) sans la tête de rotation (4.1), et qui ne sort pas de la broche de réglage (4) sous une charge prédéfinie supérieure à la charge de travail, assurant que la broche de réglage (4) est maintenue à l'emplacement où elle est positionnée.

4. Mécanisme de mouvement de porte coulissante (1) selon la revendication 1, **caractérisé par** le contre-écrou (6) comprenant un corps (6.1) de forme cylindrique, dépourvu de tout moletage périphérique, empêchant son actionnement au moyen d'un équipement standard.

5. Mécanisme de mouvement de porte coulissante (1) selon la revendication 1, **caractérisé par** le contre-écrou (6) comprenant un corps (6.1) pourvu, en son centre, d'un alésage de montage (6.2) et dans lequel une broche de réglage (4) est traversée par ledit alésage de montage (6.2).

6. Mécanisme de mouvement de porte coulissante (1) selon la revendication 1, **caractérisé par** le contre-écrou (6) sur lequel une charge prédéfinie supérieure à la charge de travail est appliquée au moyen d'un dispositif spécial introduit dans la cavité de serrage (6.3) ménagée dans le corps (6.1).

7. Mécanisme de mouvement de porte coulissante (1) selon la revendication 1, **caractérisé par** le contre-écrou (6) comportant une cavité de serrage (6.3) dont la forme géométrique est hexagonale.

8. Mécanisme de mouvement de porte coulissante (1) selon la revendication 1, **caractérisé par** le contre-écrou (6), qui est entraîné en rotation autour de son axe central par l'introduction, dans la cavité de serrage (6.3) au moyen d'un dispositif spécial réalisé conformément à la forme géométrique de la cavité de serrage (6.3), et sur lequel est appliquée une charge prédéfinie supérieure à la charge de travail.
